(19) Europäisches Patentamt

European Patent Office

Office européen des brevets

(11) **EP 0 499 524 B1**

## (12) FASCICULE DE BREVET EUROPEEN

(45) Date de publication et mention
de la délivrance du brevet:
**03.06.1998 Bulletin 1998/23**

(51) Int. Cl.$^6$: **C03C 17/00**

(21) Numéro de dépôt: **92400344.5**

(22) Date de dépôt: **11.02.1992**

(54) **Buse à alimentation dissymétrique pour la formation d'une couche de revêtement sur un ruban de verre, par pyrolyse d'un mélange gazeux**

Asymmetrisches Gaszuführungsrohr zu Beschichtung von Glasbändern durch Pyrolyse einer Gasmischung

Asymmetrical gas feeding nozzle for coating a glass ribbon by pyrolysis of a gas mixture

(84) Etats contractants désignés:
**BE CH DE ES FR GB IT LI LU**

(30) Priorité: **13.02.1991 FR 9101682**

(43) Date de publication de la demande:
**19.08.1992 Bulletin 1992/34**

(73) Titulaire: **SAINT-GOBAIN VITRAGE**
**92400 Courbevoie (FR)**

(72) Inventeurs:
• **Sauvinet, Vincent**
  **F-93200 Saint-Denis (FR)**

• **Oudard, Jean-François**
  **F-60310 Thiescourt (FR)**

(74) Mandataire: **Muller, René et al**
**SAINT-GOBAIN RECHERCHE,**
**39, quai Lucien Lefranc-BP 135**
**93303 Aubervilliers Cédex (FR)**

(56) Documents cités:
**EP-A- 0 329 519**      **EP-A- 0 365 240**
**US-A- 3 674 453**

• **CHEMICAL ABSTRACTS, vol. 98, no. 14, avril 1983, Columbus, OH (US); NIPPON**
• **SHEET GLASS Co. Ltd., p. 307, no. 112478s**

## Description

La présente invention concerne une buse équipant un appareil pour la formation, sur un ruban de verre chaud, d'une couche de revêtement obtenue à partir de gaz, tels que des gaz de métaux carbonyles ou de composés métalliques hydrogénés volatils pouvant se décomposer en touchant le verre chaud, par exemple les silanes et, notamment, le monosilane.

Par le brevet FR 2 314 152, on connaît une buse de ce type dans laquelle on envoie sur la face à revêtir du ruban de verre en cours de déplacement, un gaz de revêtement émis par un distributeur qui s'étend transversalement au ruban et à la direction de mouvement de ce dernier, de façon que le gaz s'écoule parallèlement à la surface du verre, en régime laminaire et avec un débit uniforme sur toute la largeur du ruban.

A cet effet, la buse comprend un dispositif d'injection du gaz, un bloc profilé central, un talon profilé latéral amont et un talon profilé latéral aval disposés de part et d'autre du bloc central de manière à offrir au gaz arrivant du dispositif d'injection un trajet d'écoulement le long d'un canal de guidage en U qui s'étend entre le talon latéral amont et le bloc central, entre la face inférieure du bloc central et le ruban de verre, et entre le bloc central et le talon aval et un dispositif d'aspiration du gaz ménagé à la sortie du canal entre le bloc central et le talon aval.

Les termes amont, central et aval se réfèrent au sens de mouvement du ruban de verre.

Le talon amont et le talon aval sont pourvus de faces inférieures plates qui s'étendent parallèlement à la surface du verre et à faible distance de cette surface (environ 1 mm), afin de minimiser les fuites de gaz apparaissant entre ces faces et le verre.

Cette buse fonctionne correctement lorsqu'on veut déposer sur le ruban de verre un revêtement de faible épaisseur, par exemple inférieur à 60 nanomètres et/ou mettant on jeu des débits faibles de gaz, par exemple de l'ordre de 100 l/mn sur une buse d'environ 3,30 m de large. En effet, pour ces épaisseurs, le courant gazeux se trouvant dans la partie horizontale du canal s'écoule à une vitesse inférieure à celle du ruban. Ce courant est, de ce fait, entièrement entraîné par le ruban de verre vers l'aval, de sorte qu'il ne se produit aucune fuite de gaz ni d'encrassement sur le talon amont. De même, les fuites pouvant se produire sous le talon aval sont suffisamment faibles, pour que les périodes de production soient longues par rapport aux périodes de nettoyage. La perte de verre est donc relativement limitée.

Par contre, lorsqu'on veut déposer sur le verre une couche de revêtement plus épaisse, par exemple de l'ordre de 80 nanomètres, et/ou mettant en jeu des débits gazeux plus importants, par exemple de l'ordre de 400 l/mn au moins sur une buse d'environ 3,30 m de large, la vitesse de passage du gaz peut devenir nettement supérieure à celle du ruban de verre. Mais, cette augmentation de la vitesse entraîne les inconvénients suivants :

- la longueur de la partie horizontale du canal de section en U doit être allongée dans la même proportion que les vitesses, afin que le temps de contact du gaz avec le verre soit suffisant d'une part, pour assurer sa décomposition et, d'autre part, pour obtenir l'épaisseur de couche souhaitée,

- la vitesse du gaz étant supérieure à celle du ruban de verre, les fuites sous le talon aval deviennent importantes et des fuites sous le talon amont apparaissent. Les faces inférieures de ces talons s'encrassent rapidement par dépôt de matière de revêtement, ce oui crée des veines gazeuses où les vitesses d'écoulement sont plus fortes, et se traduit par un dépôt non homogène dans le sens transversal du ruban de verre. Celui-ci se trouve alors recouvert d'une couche de matière dont l'épaisseur, donc la couleur, la réflexion lumineuse et la transmission lumineuse, varient transversalement,

- lorsque l'encrassement devient trop important, des particules de revêtement peuvent toucher le verre et y laisser des marques,

- le dépôt qui s'accroît au cours du temps nécessite un nettoyage périodique de la buse, entraînant de ce fait une perte de verre, puisque l'installation de production continue à débiter pendant le nettoyage,

- les fuites de gaz non récupérées polluent l'atmosphère du bain de flottage du verre dans la mesure où une telle buse est installée à l'intérieur d'une enceinte float pour la fabrication du verre.

La présente invention a pour but de remédier à tous ces inconvénients en proposant une buse pouvant déposer sur le ruban de verre une couche relativement épaisse et/ou mettant en jeu des débits élevés de gaz.

La buse, selon l'invention, est une buse à alimentation centrale pour la formation d'une couche de revêtement sur du verte, par exemple un ruban de verte se déplaçant à vitesse constante sur un bain de flottage, par pyrolyse d'un mélange gazeux à régime d'écoulement laminaire. Elle comprend un premier et un second blocs profilés centraux définissant entre eux un passage central d'injection transversal par rapport au ruban de verre, lesdits blocs centraux formant avec le ruban de verre deux passage entre lesquels le gaz qui arrive du passage central d'injection se partage en deux courants laminaires parallèles au ruban de verre et se dirigeant l'un vers l'amont, l'autre vers l'aval. En outre, les longueurs de ces blocs centraux sont choisies inégales. La buse comprend également un talon profilé avant et un talon profilé aval montés respectivement en amont du premier bloc central et en aval du second bloc central, blocs définissant avec ces blocs un passage d'aspiration avant et un passage d'aspiration aval.

Selon un mode de réalisation, la buse se caractérise donc en ce qu'elle comprend:

- un premier et un second blocs profilés centraux définissant entre eux un passage central d'injection transversal par rapport au ruban de verre, lesdits blocs centraux formant avec le ruban de verre deux passages d'épaisseur constante entre lesquels le gaz qui arrive du passage central d'injection se partage en deux courants laminaires, parallèles au ruban de verre et se dirigeant l'un vers l'amont et l'autre vers l'aval,

- un talon profilé amont et un talon profilé aval montés respectivement en amont du premier bloc central et en aval du second bloc central, et qui définissent avec ces derniers un passage d'aspiration amont et un passage d'aspiration aval, l'un au moins desdits talons amont et aval étant, de préférence, pourvus d'une face inférieure surélevée par rapport au ruban de verre.

La buse comprend, en outre, un dispositif d'injection de gaz monté à l'entrée du passage central d'injection et deux dispositifs d'aspiration de gaz montés respectivement à la sortie desdits passages d'aspiration amont et aval.

Lorsque les talons amont et aval sont surélevés par rapport au ruban de verre, l'éventuel encrassement de leur face inférieure n'est pas perturbant. En particulier, il n'entraîne ni la modification d'écoulements gazeux susceptibles de conduire à des irrégularités du revêtement, ni la formation de marques faites sur le verre lorsqu'il devient trop important.

De plus, bien que lesdits talons amont et aval soient à grande distance du ruban de verre, il ne se produit aucune fuite de gaz vers l'amont et vers l'aval car les deux courants gazeux qui s'écoulent sur le ruban de verre vers l'amont et l'aval sont respectivement bloqués par des contre-courants de gaz ambiant qui sont aspirés en même temps que lesdits courants gazeux.

Le ruban de verre étant en mouvement, il a tendance à entraîner vers l'aval une fraction importante du débit gazeux arrivant du passage central d'injection. Cette fraction de débit s'écoule à une vitesse supérieure à celle du débit restant qui se dirige vers l'amont. Il en résulte que, si le passage central d'injection est placé à égale distance des passages d'aspiration amont et aval, le temps correspondant au cheminement du gaz vers l'amont le long du trajet imposé serait plus long que celui nécessaire pour la pyrolyse sur le ruban de verre chaud, ce qui revient à dire qu'une partie de la longueur du premier bloc central serait inutile. Par contre, le temps de contact pour le courant gazeux dirigé vers l'aval ne serait pas suffisant, de sorte qu'une partie du gaz de revêtement ne serait pas utilisée. Une telle buse à alimentation centrale n'est donc pas optimisée du point de vue de la consommation en gaz réactif de dépôt et de l'encombrement. Ce dernier point est particulièrement critique lorsque l'installation de revêtement est placée dans l'enceinte d'un bain de flottage où la place disponible est réduite.

On remédie à ces inconvénients selon l'invention par le fait que les longueurs des blocs centraux sont inégales. On les calcule de manière que les temps de contact du gaz avec le ruban de verre soient sensiblement égaux pour le courant gazeux se dirigeant vers l'amont et le courant gazeux se dirigeant vers l'aval.

Une telle buse avec des proportions optimisées est relativement compacte et elle peut être introduite dans une enceinte float. Elle possède des capacités de dépôt telles, qu'elle autorise des dépôts qui étaient considérés comme impossibles avec des buses classiques.

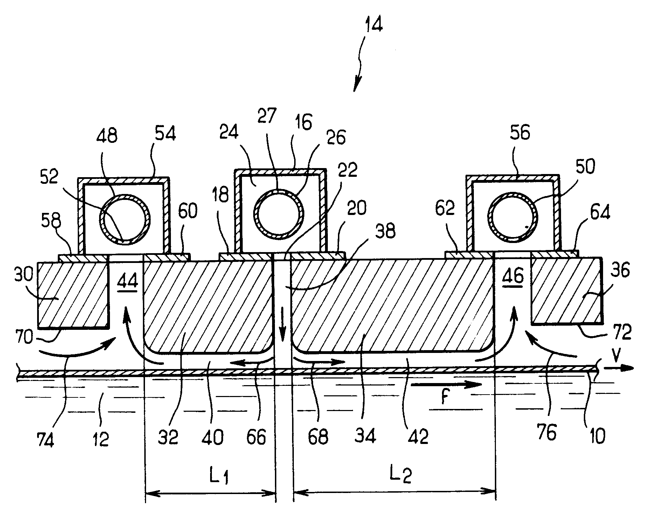

Un mode de réalisation de l'invention sera décrit à présent, en détail, en regard de l'unique figure annexée qui représente schématiquement la buse en coupe transversale.

La figure montre un ruban de verre 10 surnageant la surface d'un bain de métal 12, par exemple de l'étain en fusion à l'intérieur d'une enceinte non représentée contenant le bain d'étain. Le verre se déverse sur le bain à partir d'un four de fusion de verre, non représenté, situé à gauche de la figure. Il s'y étale jusqu'à former un ruban, lequel est extrait du bain à une vitesse constante dans le sens de la flèche f par des moyens extracteurs montés à la sortie du bain.

Au-dessus du ruban de verre 10, dans une zone du bain float où il a acquis une stabilité dimensionnelle, est montée une buse 14 pour l'amenée de gaz de revêtement. La buse est disposée transversalement au ruban de verre et elle s'étend sur toute la largeur de ce dernier. Elle comprend un profilé 16, de section en U retourné dont les bords des parois verticales sont fixés sur des consoles horizontales 18, 20. Celles-ci définissent entre elles une ouverture oblongue 22 transversale par rapport au ruban et ayant une longueur égale à la largeur du ruban.

Dans la chambre 24, définie par le profilé, est logé un conduit d'amenée de gaz 26 percé sur toute sa longueur de trous 27. Le gaz s'étend dans la chambre 24 où il se met à une pression uniforme et s'écoule à travers l'ouverture 22.

La buse comprend un talon profilé amont 30, un premier bloc profilé central 32, un second bloc profilé central 34 et un talon profilé aval 36, disposés dans cet ordre, d'amont en aval, au-dessus du ruban de verre 10.

Ces éléments, qui sont tous usuellement réalisés en carbone, s'étendent chacun sur toute la largeur du ruban de verre et définissent entre eux et avec celui-ci un passage d'injection vertical 38 compris entre les parois latérales contiguës des deux blocs centraux et se raccordant à l'ouverture 22, un passage amont 40 et un passage aval 42 horizontaux, d'épaisseur constante (environ 3 à 6 mm) définis respectivement entre les parois inférieures des blocs centraux et le ruban de verre, un passage d'aspiration amont 44 formé entre le talon amont 30 et le premier bloc central 32 et un passage d'aspiration aval 46 compris entre le second bloc central 34 et le talon aval 36.

A la sortie des passages d'aspiration 44 et 46 sont adaptés des moyens d'aspiration, constitués de façon connue en soi par des conduits 48, 50 percés de trous 52 et s'étendant sur toute la largeur de l'installation. Ces conduits sont logés dans des profilés 54, 56 en U retourné, fixés sur les blocs centraux et sur les talons par l'intermédiaire des consoles 58, 60 et 62, 64.

Le courant gazeux arrivant du conduit d'alimentation 26 descend par le passage d'injection 38, puis se partage en deux parties : un courant amont 66 s'écoulant dans le passage horizontal amont 40 dans le sens inverse de celui du mouvement du ruban de verre, et un courant aval 68 qui s'écoule dans le passage aval 42 dans le même sens que celui du mouvement du ruban de verre. Enfin, le courant amont et le courant aval sont aspirés à travers les passages d'aspiration amont 44 et aval 46.

Conformément à l'invention, pour éviter que l'éventuel encrassement des talons amont et aval 30 et 36 ne perturbe l'écoulement gazeux, les faces inférieures 70, 72 de ces derniers sont avantageusement surélevées par rapport au ruban de verre 10, à une distance suffisante, par exemple comprise entre 3 et 50 mm et, de préférence, entre 10 et 30 mm et même entre 10 et 20 mm. Cet écartement n'entraîne cependant pas l'apparition de fuites de gaz de revêtement sous les talons car, en raison de la dépression qui est créée par l'aspiration dans les passages d'aspiration 44, 46, des contre-courants de gaz ambiant 74, 76 s'établissent sous ces talons en sens inverse des courants amont et aval 66 et 68 et bloquent ainsi toute fuite.

Comme on l'a indiqué précédemment, pour optimiser le coût résultant de la consommation en réactifs gazeux et l'encombrement de la buse, on dimensionne les blocs centraux 32, 34 de telle sorte que le temps de contact de gaz de revêtement avec le ruban de verre 10 soit égal pour le courant amont 66 et pour le courant aval 68.

On désignera par :

- $L_1$ la longueur du bloc central 32,
- $L_2$ la longueur du bloc central 34,
- $V_1$ la vitesse débitante à laquelle le gaz remonte dans le passage amont 40,
- $V_2$ la vitesse débitant à laquelle le gaz descend dans le passage aval 42,
- v la vitesse de défilement du ruban de verre,
- $\Delta P_1$ la perte de charge en amont, et
- $\Delta P_2$ la perte de charge en aval.

$$\Delta P_1 = K L_1 (V_1 + v/2)$$

$$\Delta P_2 = K L_2 (V_2 - v/2)$$

L'égalité des temps de contact du gaz avec le ruban de verre en amont et en aval se traduit par l'équation :

$$L_1/V_1 = L_2/V_2 \qquad (1)$$

L'égalité de fait des pertes de charge amont et aval s'écrit :

$$L_1 (V_1 + v/2) = L_2 (V_2 - v/2) \qquad (2)$$

On pose :

$$V_1 + V_2 = V \qquad (3)$$

où V est la vitesse d'injection du gaz.

On sait que V = Q/e , où Q est le débit par mètre de largeur du buse et e est l'épaisseur de la lame de gaz comprise entre les blocs centraux et le ruban de verre.

Compte-tenu de (1), l'équation (2) devient :

$$V_1 (V_1 + v/2) = V_2 (V_2 - v/2)$$

et en remplaçant dans cette équation $V_2$ par sa valeur $V-V_1$ tirée de (3), on obtient tous calculs faits :

$$V_1 = (V - v/2) / 2 \qquad (4)$$

$$V_2 = (V + v/2) / 2 \qquad (5)$$

d'où l'on tire :

$$L_1/L_2 = (V - v/2) / (V + v/2) \qquad (6)$$

On donnera à présent une application numérique : soit

$$v = 0,2 \text{ m/s} \qquad (7)$$

$$V = 0,4 \text{ m/s}$$

$$L_1 + L_2 = 400 \text{ mm}$$

On obtient :

$$V_1 = 0,15 \text{ m/s}$$

$$V_2 = 0,25 \text{ m/s}$$

La résolution du système d'équations (6), (7) donne :

$$L_1 = 150 \text{ mm}$$

$$L_2 = 250 \text{ mm}$$

Une telle buse avec des proportions optimisées possède un rendement élevé et elle autorise des dépôts considérés comme impossibles avec des buses classiques.

Une telle buse peut être montée à l'intérieur d'une enceinte float comme décrit, mais elle peut également être montée hors float.

En outre, des moyens d'aspiration complémentaire peuvent être mis en place en amont et/ou en aval de cette buse, en particulier si l'un des talons n'est pas surélevé, par exemple le talon amont, du côté de ce talon non surélevé.

## Revendications

1. Buse (14) à alimentation centrale pour la formation d'une couche de revêtement sur du verre, par exemple un ruban de verre (10) se déplaçant à vitesse constante sur un bain de flottage (12), p r pyrolyse d'un mélange gazeux à régime d'écoulement laminaire, **caractérisé en ce qu'**elle comprend :

   - un premier et un second blocs profilés centraux (32, 34) définissant entre eux un passage central d'injection (38), transversal par rapport au ruban de verre (10), lesdits blocs centraux formant avec le ruban de verre deux passages (40, 42) entre lesquels le gaz qui arrive du passage central d'injection (38) se partage en deux courants laminaires (66, 68), parallèles au ruban de verre et se dirigeant l'un vers l'amont et l'autre vers l'aval, les longueurs ($L_1$ et $L_2$) des éléments centraux (32, 34) étant inégales,
   - un talon profilé amont (30) et un talon profilé aval (36) montés respectivement en amont du premier bloc central (32) et en aval du second bloc central (34), définissant avec ceux-ci un passage d'aspiration amont (44) et un passage d'aspiration aval (46).

2. Buse (14) selon la revendication 1, **caractérisée en ce que** les longueurs ($L_1$ et $L_2$) des éléments centraux (32, 34) sont calculées de manière que le temps de contact du gaz avec le ruban de verre (10) soit sensiblement égal pour le courant gazeux se dirigeant vers l'amont (66) et le courant gazeux se dirigeant vers l'aval (68).

3. Buse selon l'une des revendications 1 ou 2, **caractérisée en ce que** les longueurs ($L_1$ et $L_2$) des éléments centraux (32, 34) respectivement amont et aval sont sensiblement telles que :

$$L_1 \text{ et } L_2 = (V - v/2) / V + v/2$$

   où V est la vitesse d'injection du gaz de revêtement et v la vitesse de défilement du ruban de verre.

4. Fuse (14) selon l'une des revendications précédentes, **caractérisée en ce que** l'un au moins desdits talons amont (30) et aval (36) est pourvu d'une face inférieure (70, 72) surélevée par rapport au ruban de verre (10).

5. Buse (14) selon la revendication 4, **caractérisée en ce que** les faces inférieures (70, 72) des talons amont (30) et/ou aval (36) sont à une distance du ruban de verre (10) comprise entre 3 et 50 mm, de préférence entre 10 et 30 mm et même 10 et 20 mm.

6. Buse (14) selon l'une des revendications précédentes, **caractérisée en ce qu'**elle comprend en outre un dispositif d'injection de gaz (26) monté à l'entrée du passage central d'injection (38), et deux dispositifs d'aspiration de gaz (48, 50) montés respectivement à la sortie des passages d'aspiration amont et aval (44, 46).

7. Buse (14) selon l'une des revendications précédentes, **caractérisée en ce qu'**elle est montée à l'intérieur d'une enceinte de flottage.

## Claims

1. Central supply nozzle (14) for the formation of a coating layer on glass, e.g. a glass ribbon (10) travelling at a constant speed on a float bath (12) by pyrolysis of a gaseous mixture under laminar flow conditions, characterized in that it comprises a first and a second central, profile blocks (32, 34) defining between them a central injection passage (38), transverse with respect to the glass ribbon (10), said central blocks forming with the glass ribbon two passages (40, 42) between which the gas arriving from the central injection passage (38) is subdivided into two laminar streams (66, 68), parallel to the glass ribbon and directed in one case towards the upstream direction and in the other towards the downstream direction, the lengths ($L_1$, $L_2$) of the central elements (32, 34) not being equal, an upstream, profiled heel (30) and a downstream, profiled heel (36) respectively fitted upstream of the first central block (32) and downstream of the second central block (34), defining therewith an upstream suction passage (44) and a downstream suction passage (46).

2. Nozzle according to claim 1, characterized in that the lengths ($L_1$, $L_2$) of the central elements (32, 34) are calculated in such a way that the contact time of the gas with the glass ribbon (10) is substantially equal for the gas stream directed towards the upstream direction (66) and the gas stream directed towards the downstream direction (68).

3. Nozzle according to one of the claims 1 or 2, characterized in that the lengths ($L_1$, $L_2$) of the central, respectively upstream and downstream elements (32, 34) are essentially such that:

$$L_1 \text{ and } L_2 = (V - v/2) / V + v/2$$

where V is the injection speed of the coating gas and v the glass ribbon movement speed.

4. Nozzle (14) according to one of the preceding claims, characterized in that at least one of said upstream (30) and downstream (36) heels is provided with a lower face (70, 72) raised with respect to the glass ribbon (10).

5. Nozzle (14) according to claim 4, characterized in that the lower faces (70, 72) of the upstream (30) and/or downstream (36) heels are at a distance from the glass ribbon (10) between 3 and 50 mm, preferably 10 and 30 mm and even 10 and 20 mm.

6. Nozzle (14) according to one of the preceding claims, characterized in that it also comprises a gas injection device (26) fitted at the entrance of the central injection passage (38) and two gas suction devices (48, 50) respectively fitted at the exit of the upstream and downstream suction passages (44, 46).

7. Nozzle (14) according to one of the preceding claims, characterized in that it is installed within a float enclosure.

**Patentansprüche**

1. Düse (14) mit zentraler Zufuhr für die Bildung einer Beschichtung durch Pyrolyse eines Gasgemischs mit laminar geführter Strömung auf einem Glas, beispielsweise einem Glasband (10), das mit gleichbleibender Geschwindigkeit auf einem Floatbad (12) durchläuft, **dadurch gekennzeichnet, daß** sie

   - einen ersten (32) und einen zweiten stromlinienförmigen zentralen Block (34), die zusammen einen quer zum Glasband (10) stehenden zentralen Einblaskanal (38) begrenzen, wobei die zentralen Blöcke mit dem Glasband zwei Strömungswege (40, 42) bilden, auf welche sich das Gas, das vom zentralen Einblaskanal (38) kommt, in zwei parallel zum Glasband verlaufende laminare Ströme (66, 68) unterteilt, von denen sich der eine in Durchlaufrichtung nach hinten und der andere nach vorn richtet, und die Längen ($L_1$ und $L_2$) der zentralen Bauelemente (32, 34) ungleich sind, und

   - einen hinteren (30) und einen vorderen stromlinienförmigen Vorsatz (36), der jeweils hinter dem ersten zentralen Block (32) bzw. vor dem zweiten zentralen Block (34) angebracht ist und mit diesen einen hinteren Absaugkanal (44) und einen vorderen Absaugkanal (46) bildet,

umfaßt.

2. Düse (14) nach Anspruch 1, **dadurch gekennzeichnet, daß** die Längen ($L_1$ und $L_2$) der zentralen Bauelemente (32, 34) so berechnet sind, daß die Zeit des Kontakts des Gases mit dem Glasband (10) für den nach hinten (66) und den nach vorn gerichteten Gasstrom (68) im wesentlichen gleich ist.

3. Düse nach Anspruch 1 oder 2, **dadurch gekennzeichnet, daß** die Längen ($L_1$ und $L_2$) des hinteren (32) bzw. vorderen zentralen Bauelements (34) im wesentlichen derart sind, daß

$$L_1 \text{ und } L_2 = (V - v/2)/(V + v/2),$$

wobei V die Einblasgeschwindigkeit des Beschichtungsgases und v die Durchlaufgeschwindigkeit des Glasbandes ist.

4. Düse (14) nach einem der vorhergehenden Ansprüche, **dadurch gekennzeichnet, daß** vom hinteren (30) und vorderen Vorsatz (36) mindestens einer mit einer Unterseite (70, 72) versehen ist, die in bezug auf das Glasband (10) erhöht ist.

5. Düse (14) nach Anspruch 4, **dadurch gekennzeichnet, daß** der Abstand der Unterseite (70, 72) des hinteren (30) und/oder vorderen Vorsatzes (36) vom Glasband (10) 3 bis 50 mm, vorzugsweise 10 bis 30 mm und selbst 10 bis 20 mm beträgt.

6. Düse (14) nach einem der vorhergehenden Ansprüche, **dadurch gekennzeichnet, daß** sie außerdem eine Einblaseinrichtung (26) für das Gas, die am Eingang des zentralen Einblaskanals (38) angebracht ist, und zwei Absaugeinrichtungen (48, 50), die am Ausgang des hinteren (44) bzw. vorderen (46) Ansaugkanals angebracht sind, enthält.

7. Düse (14) nach einem der vorhergehenden Ansprüche, **dadurch gekennzeichnet, daß** sie in einem Floatglasbehälter angebracht ist.